(19) Europäisches Patentamt
European Patent Office
Office européen des brevets

(11) Veröffentlichungsnummer : **0 468 323 B1**

(12) **EUROPÄISCHE PATENTSCHRIFT**

(45) Veröffentlichungstag der Patentschrift :
**08.09.93 Patentblatt 93/36**

(51) Int. Cl.$^5$ : **B01J 13/16,** B41M 5/165

(21) Anmeldenummer : **91111711.7**

(22) Anmeldetag : **13.07.91**

(54) **Verbesserte Mikrokapseln.**

(30) Priorität : **26.07.90 DE 4023703**

(43) Veröffentlichungstag der Anmeldung :
**29.01.92 Patentblatt 92/05**

(45) Bekanntmachung des Hinweises auf die Patenterteilung :
**08.09.93 Patentblatt 93/36**

(84) Benannte Vertragsstaaten :
**CH DE FR GB IT LI**

(56) Entgegenhaltungen :
**EP-A- 0 050 264**

(73) Patentinhaber : **BAYER AG**
**D-51368 Leverkusen (DE)**

(72) Erfinder : **Klug, Günter, Dr.**
**Wiener-Neustädter-Strasse 140**
**W-4019 Monheim (DE)**
Erfinder : **Weimann, Norbert, Dr.**
**Heymannstrasse 32**
**W-5090 Leverkusen 1 (DE)**
Erfinder : **Vogel, Josef, Dr.**
**Heymannstrasse 61**
**W-5090 Leverkusen 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die Herstellung von Mikrokapseln durch Grenzflächenpolyaddition und Grenzflächenpolykondensation wird von P.C. Madau in Drug Development and Industrial Pharmacy 4, 289 bis 304 (1978), allgemein beschrieben. Speziell die Herstellung von Mikrokapseln durch Grenzflächenpolyaddition zwischen Polyisocyanaten und Polyaminen ist beispielsweise beschrieben in den DE-OS'en 2 109 335, 2 251 381, 2 242 910, 2 120 921 und 3 020 148.

Wenn man in diese Verfahren wasserlösliche Polyamine einsetzt, so benötigt man zur Erzeugung von dichten Kapseln mit festen Kapselwänden und zur vollständigen Abreaktion der im allgemeinen in der organischen Phase gelösten Polyisocyanate erhöhte Temperaturen. Beispielsweise führt man die Mikroverkapselung in solchen Fällen bei Temperaturen von 50 bis zu 80°C zu Ende. Nachteilig ist hierbei, daß es dann verstärkt zu einer Reaktion von Wasser mit Polyisocyanat kommt. Das dabei entstehende Kohlendioxid verursacht eine verstärkte Agglomerationsneigung der Kapseln, eine hohe Schaumbildung und kann zur Zerstörung der Kapseln führen. Bei Verwendung anderer reaktiver Komponenten als Polyisocyanate, z.B. bei Säurechloriden und ähnlichen Verbindungen, werden bei höherer Temperatur die reaktiven Komponenten durch Wasser hydrolysiert und stehen dann für die Bildung von Kapselwänden nicht mehr zur Verfügung.

Es wurden nun Mikrokapseln gefunden, die dadurch gekennzeichnet sind, daß ihre Wände das Reaktionsprodukt einer Grenzflächenpolyaddition und/oder Grenzflächenpolykondensation zwischen einem Hydroxylamin und mindestens einer mit Amino- und Alkoholgruppen reaktiven Komponente enthalten. Vorzugsweise bestehen die Wände erfindungsgemäßer Mikrokapseln aus diesem Reaktionsprodukt.

Das Hydroxylamin kann beispielsweise der Formel (I) entsprechen

$$R - NH - OH \qquad (I),$$

in der

R für Wasserstoff, $C_1$- bis $C_{12}$-Alkyl, $C_6$- bis $C_{10}$-Aryl, $C_7$- bis $C_{12}$-Aralkyl oder $C_7$- bis $C_{12}$-Alkaryl steht.

Die Alkylreste und die Alkylteile der Aralkyl- und Alkarylreste können geradkettig oder verzweigt sein.

Bevorzugt sind Hydroxylamine der Formel (I), bei der R für Wasserstoff, $C_1$- bis $C_{12}$-Alkyl oder Phenyl steht. Besonders bevorzugt ist das unsubstituierte Hydroxylamin (Formel (I), R = Wasserstoff).

Die Hydroxylamine können auch in Form ihrer Salze eingesetzt werden, beispielsweise in Form von Salzen der Formel (II)

$$\left[ R - \overset{\oplus}{N}H_2 - OH \right]_n \; X^{n\ominus} \qquad (II),$$

in der

R die bei Formel (I) angegebene Bedeutung hat,

X für ein Anion und

n für die Wertigkeit von X steht.

$X^{n\ominus}$ kann beispielsweise für $Cl^-$, $HCO_3^-$, $CO_3^{2-}$, $Br^-$, $J^-$, $SO_4^{2-}$, $NO_3^-$, $PO_4^{3-}$ oder $SiO_4^{4-}$ stehen.

Aus den Salzen der Formel (II) lassen sich die reaktiven Hydroxylamine der Formel (I) durch Zusatz von Basen freisetzen. Geeignete Basen sind beispielsweise Alkali- und Erdalkalihydroxide, insbesondere Kalium-, Natrium- und Calciumhydroxid, die vorzugsweise als wäßrige Lösung eingesetzt werden.

Als Beispiele für mit Amino- und Alkoholgruppen reaktive Komponenten seien genannt:

Di- und Polycarbonsäurechloride, wie Sebacoylchlorid, Terephthaloylchlorid, Adipinsäuredichlorid, Oxalsäuredichlorid, Tricarballylsäuretrichlorid und 1,2,4,5-Benzolcarbonsäuretetrachlorid,

Di- und Polysulfonsäurechloride, wie 1,3-Benzolsulfonsäuredichlorid und 1,3,5-Benzolsulfonsäuretrichlorid, Phosgen, Dichlor- und Polychlorameisensäureester, wie 1,3,5-Benzoltrichloroformiat und Ethylenbischloroformiat und, bevorzugt, Di- und Polyisocyanate, wie aliphatische, cycloaliphatische, araliphatische, aromatische und heterocyclische Di- und Polyisocyanate, wie sie z.B. von W. Siefken in Justus Liebigs Annalen der Chemie, 562, Seiten 75 bis 136, beschrieben werden, beispielsweise Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat und beliebige Gemische dieser Isomeren, 1-Isocyanato-3,3,5-trimethyl-5-isocyanatomethyl-cyclohexan, wie z.B. beschrieben in DE-AS 1 202 785 und US-PS 3 401 190, 2,4- und 2,6-Hexahydrotoluylendiisocyanat sowie beliebige Gemische dieser Isomeren, Hexahydro-1,3- und -1,4-phenylendiisocyanat, Perhydro-1,4'- und -4,4'-diphenylmethandiisocyanat, 1,3-und 1,4-Phenylendiisocyanat, 2,4- und 2,6-Toluylendiisocyanat sowie beliebige Gemische dieser Isomeren, Diphenylmethan-2,4'- und -4,4'-diisocyanat, Naphthylen-1,5-diisocyanat, Triphenylmethan-4,4', 4"-Triisocyanat, Polyphenylpolymethylenpolyisocyanate, wie sie durch Anilin-Formaldehyd-Kondensation und anschließende Phosgenierung erhalten werden und z.B. in den GB-PS'en 874 430 und 848 671 beschrieben werden, m- und p-Isocyanatophenyl-sulfonylisocyanate gemäß der US-PS 3 454 606, perchlorierte Arylpolyisocyanate, wie sie z.B. in der DE-AS 1 157 601 (= US-PS 3 277 138) beschrieben werden, Carbodiimidgruppen aufweisende Polyisocyanate, wie sie in der DE-PS 1 092 007 (= US-PS 3 152 162) beschrieben werden, Diisocyanate, wie sie in der US-PS 3 492 330 beschrieben werden, Allophanatgruppen aufweisende Polyisocyanate, wie sie z.B. in der GB-PS 761 626 und der veröffentlichten NL-Patentanmeldung 7 102 524 beschrieben werden, Isocyanuratgruppen aufweisende Polyisocyanate, wie sie z.B. in der US-PS 3 001 973, in den DE-PS'en 1 022 789, 1 222 067 und 1 027 394 sowie in den DE-OS'en 1 929 034 und 2 004 048 beschrieben werden, Urethangruppen aufweisende Polyisocyanate, wie sie z.B. in der BE-PS 752 261 oder in der US-PS 3 394 164 beschrieben werden, acylierte Harnstoffgruppen aufweisende Polyisocyanate gemäß der DE-PS 1 230 778, Biuretgruppen aufweisende Polyisocyanate, wie sie z.B. in der DE-PS 1 101 394 (=US-PS'en 3 124 605 und 3 201 372) sowie in der GB-PS 889 050 beschrieben werden, durch Telomerisationsreaktionen hergestellte Polyisocyanate, wie sie z.B. in der US-PS 3 654 106 beschrieben werden, Ethergruppen aufweisende Polyisocyanate, wie sie z.B. in den GB-PS'en 965 474 und 1 072 956, in der US-PS 3 567 763 und in der DE-PS 1 231 688 genannt werden, Umsetzungsprodukte der obengenannten Isocyanate mit Acetalen gemäß der DE-PS 1 072 385 und polymere Fettsäurereste enthaltende Polyisocyanate gemäß der US-PS 3 455 883.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Geeignete modifizierte, aliphatische Isocyanate sind z.B. solche auf der Basis von Hexamethylen-1,6-diisocyanat, m-Xylylendiisocyanat, 4,4'-Diisocyanat-dicyclohexylmethan und Isophorondiisocyanat, die pro Molekül mindestens zwei Isocyanatgruppen aufweisen.

Ferner geeignet sind z.B. Polyisocyanate auf der Basis von Derivaten des Hexamethylen-1,6-diisocyanats mit Biuretstruktur wie in DE-AS 1 101 394, DE-AS 1 453 543, DE-OS 1 568 017 und DE-OS 1 931 055 beschrieben.

Außerdem einsetzbar sind Polyisocyanato-polyuretonimine, wie sie durch Carbodiimidisierung von Biuretgruppen enthaltendem Hexamethylen-1,6-diisocyanat mit phosphororganischen Katalysatoren entstehen, wobei sich primär gebildete Carbodiimidgruppen mit weiteren Isocyanatgruppen zu Uretonimingruppen umsetzen.

Es können auch Isocyanurat-modifizierte Polyisocyanate mit mehr als zwei endständigen Isocyanatgruppen verwendet werden, z.B. solche, deren Herstellung auf Basis von Hexamethylendiisocyanat in der DE-OS 2 839 133 beschrieben ist. Andere Isocyanurat-modifizierte Polyisocyanate können analog dazu erhalten werden.

Geeignet sind ferner Isocyanate der Formel

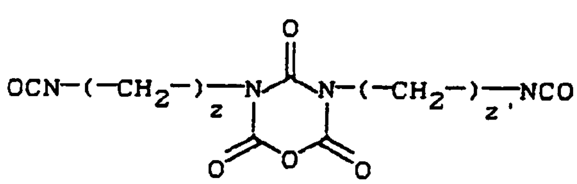

(III),

in der

z und z' unabhängig voneinander jeweils für eine ganze Zahl von 3 bis 6 stehen, die beispielsweise gemäß den Beispielen 1a oder 4a der US-PS 4 253 682 oder analog dazu hergestellt werden können.

Es können auch Gemische aus den genannten Isocyanaten verwendet werden, z.B. Gemische aliphatischer Isocyanate, Gemische aromatischer Isocyanate, Gemische aus aliphatischen und aromatischen Isocyanaten, insbesondere Mischungen, die gegebenenfalls modifizierte Diphenylmethandiisocyanate enthalten.

Bevorzugte Isocyanate sind biuretisches Hexamethylendiisocyanat gegebenenfalls in Abmischung mit 4,4'-Diphenylmethanisocyanat und gegebenenfalls 2,4-Diphenylmethanisocyanat, trimerisiertes Hexamethylendiisocyanat gegebenenfalls in Abmischung mit 4,4'-Diphenylmethandiisocyanat und gegebenenfalls 2,4-Diphenylmethandiisocyanat und Isocyanate der Formel (III).

Weitere bevorzugte Diisocyanate sind die in den DE-OS'en 3 105 776 und 3 521 126 angegebenen Alkylbenzoldiisocyanate und Alkoxybenzoldiisocyanate, auch in Form ihrer Biuret-isocyanaturetdion-Oligomeren.

Die hier beschriebenen, mit Amino- und/oder Alkoholgruppen reaktiven Substanzen können auch als Gemische untereinander Verwendung finden. Weiterhin lassen sich die hier beschriebenen, mit Amino- und Alkoholgruppen reaktiven Substanzen oder Substanzgemische auch in Form ihrer Prepolymeren verwenden. Von besonderem Interesse sind Isocyanate der Formel (III), Derivate des Hexamethylen-1,6-diisocyanats mit Biuretstruktur und Isocyanurat-modifizierte Polyisocyanate.

Als Kernmaterial zur Einkapselung in die erfindungsgemäßen Mikrokapseln kommen z.B. beliebige, mit Wasser wenig mischbare, hydrophobe Flüssigkeiten in Frage, beispielsweise aliphatische und aromatische Kohlenwasserstoffe, Halogenkohlenwasserstoffe, Ether, Ester und natürliche Fette und Öle, die keine mit den wandbildenden Komponenten reagierende Gruppen enthalten. Als Kernmaterialien kommen auch Feststoffe in Frage, beispielsweise Wirkstoffe, Pharmazeutika, Pestizide und Herbizide, die gelöst oder in fester Form verkapselt werden können.

Von besonderer Bedeutung sind Aufzeichnungsmaterialien, die erfindungsgemäße Mikrokapseln enthalten. Unter Aufzeichnungsmaterialien werden dabei insbesondere solche Materialien verstanden, auf denen durch bildmäßigen mechanischen Druck oder durch bildmäßiges Erhitzen sichtbare Darstellungen erzeugt werden können. Als Beispiel seien Reaktionsdurchschreibepapiere genannt (siehe M. Gutcho, Capsule Technology and Microencapsulation, Noyes Data Corporation, 1972, Seiten 242 bis 277; G. Baxter, Microencapsulation, Processes and Applications, herausgegeben von J.E. Vandegaer, Plenum Press New York-London, Seiten 127 bis 143).

Reaktionsdurchschreibepapiere können z.B. aus zwei oder mehreren aufeinandergelegten Papierblättern bestehen, wobei das jeweils obere Blatt auf der Rückseite eine Geberschicht und das jeweils untere Blatt auf der Vorderseite eine Nehmerschicht enthält. Es ist also jeweils eine Geberschicht und eine Nehmerschicht miteinander in Kontakt. Die Geberschicht enthält Mikrokapseln, deren Kernmaterial eine Lösung eines Farbstoffbildners in einem organischen Lösungsmittel ist. Die Nehmerschicht enthält einen Farbentwickler, d.h. ein Material, das den Farbstoffbildner zum Farbstoff umwandelt. Eine Durchschrift entsteht, wenn die Mikrokapseln durch den Druck eines Schreibgerätes zerstört werden und der Farbstoffbildner mit dem Farbentwickler reagiert.

Wenn die Mikrokapseln zusammen mit einem Bindemittel und einem Entwickler auf ein Papier aufgebracht werden, und das Papier danach bildmäßig erhitzt wird, so entsteht eine sichtbare Darstellung, die dem bildmäßigen Erhitzen entspricht. Es handelt sich dann um ein thermoreaktives Aufzeichnungssystem.

Die Farbstoffbildner enthaltende Mikrokapseln und der Farbentwickler können auch auf derselben Seite eines Papierblatts aufgebracht sein. Es handelt sich dann um "self contained paper". Auf solchem Material kann durch bildmäßigen Druck oder bildmäßiges Erhitzen eine sichtbare Darstellung erzeugt werden.

Die Mikrokapseln der vorliegenden Erfindung können z.B. als Farbstoffbildner solche Leukofarbstoffe enthalten, wie sie bei druck- und hitzereaktiven Aufzeichnungsmaterialien üblich sind. Bevorzugt sind solche Typen von Leukofarbstoffen, bei denen es sich um Derivate des Triphenylmethans, Fluorans, Phenothiazins, Auramins, Spiropyrans, Indolinophthalids oder Oxazins handelt, die jeweils als einzelne Verbindung oder als Gemisch verschiedener Verbindungen zum Einsatz kommen können.

Beispiele für solche Leuko-Farbstoffe sind:

3,3-Bis-(p-dimethylaminophenyl)-phthalid, 3,3-Bis-(p-dimethylaminophenyl)-6-dimethylaminophthalid (Kristallviolettlacton), 3,3-Bis-(p-dimethylaminophenyl)-6-diethylaminophthalid, 3,3-Bis-(p-dimethylaminophenyl)-6-chlorphthalid, 3,3-Bis-(p-dibutylaminophenyl)-phthalid, 3-Cyclohexylamino-6-chlorfluoran, 3-Dimethylamino-5,7-dimethylfluoran, 3-Dimethylamino-7-chlorfluoran, 3-Diethylamino-7-methylfluoran, 3-Diethylamino-7,8-benzfluoran, 3-Diethylamino-6-methyl-7-chlorfluoran, 3-(N-p-Tolyl-N-ethylamino)-6-methyl-7-anilinofluoran, 3-Pyrrolidino-6-methyl-7-anilinofluoran, 2-[N-(3'-Trifluormethylphenyl)-amino]-6-diethylaminofluoran, 2-[3,6-Bis-(diethylamino)-9-(o-chloranilino)-xanthylbenzoesäurelactam], 3-Diethylamino-7-(o-chloranilino)-fluoran, 3-Dibutylamino-7-(o-chloranilino)-fluoran, 3-N-Methyl-N-amylamino-6-methyl-7-anilinofluoran, 3-N-Methyl-N-cyclohexylamino-6-methyl-7-anilinofluoran, 3-Diethylamino-6-methyl-7-aninінofluoran, 3-[N,N-Diethylamino)-5-methyl-7-(N,N-dibenzylamino)-fluoran, Benzoylleucomethylenblau, 6'-Chlor-8'-methoxy-benzoindolino-spiropyran, 6'-Brom-3'-methoxy-benzoindolino-spiropyran, 3-(2'-Hydroxy-4'-dimethylaminophenyl)-3-(2'-methoxy-5'-chlorphenyl)-phthalid, 3-(2'-Hydroxy-4'-dimethylaminophenyl)-3-(2'-methoxy-5'-nitrophenyl)-phthalid, 3-(2'-Hydroxy-4'-diethylaminophenyl)-3-(2'-methoxy-5'-methylphenyl)-phthalid, 3-(2'-Methoxy-4'-dimethylaminophenyl)3-(2'-hydroxy-4'-chlor-5'-methylphenyl)-phthalid, 3-(N-Ethyl-N-tetrahydrofuryl)-amino-6-methyl-7-anilinofluoran, 3-N-Ethyl-N-(2-ethoxypropyl)-amino-6-methyl-7-anilinofluoran, 3-(N-Methyl-N-isopropyl)-amino-6-methyl-7-anilinofluoran, 3-Morpholino-7-(N-propyl-trifluormethylanilino)-fluoran, 3-Pyrrolidino-7-trifluormethylanilinofluoran, 3-Diethylamino-5-chlor-7-(N-benzyl-trifluormethylanilino)-fluoran, 3-Pyrrolidino-7-(di-p-chlorphenyl)-methylaminofluoran, 3-Diethylamino-5-chlor-7-(α-phenylethylamino)-fluoran, 3-(N-Ethyl-p-toluidino)-7-(α-phenylethylamino)-fluoran, 3-Diethylamino-7-(o-methoxycarbonylphenylamino)-fluoran, 3-Diethylamino-5-methyl-7-(α-phenylethylamino)-fluoran, 3-Diethylamino-7-piperidinofluoran, 3-Chlor-3-(N-methyltoluidino)-7-(p-n-butylanilino)-fluoran, 3-Dibutylamino-6-methyl-7-anilinofluoran, 3,6-Bis-(dimethylamino)-fluorenspiro-(9,3'-6-dimethylaminophthalid, 3-(N-Benzyl-N-cyclohexylamino)-5,6-benzo-7-naphthylamino-4'-bromfluoran, 3-Diethylamino-6-chlor-7-anilinofluoran, 3-Diethylamino-6-methyl-7-mesidino-4',5'-benzofluoran, 3-N-Methyl-N-isopropyl-6-methyl-7-anilinofluoran, 3-N-Ethyl-N-amyl-6-methyl-7-anilinofluoran, 3-Diethylamino-6-methyl-7-(2',4'-dimethylanilino)-fluoran, 2-Phenyl-4-(4-diethylaminophenyl)-4-(4-methoxyphenyl)-6-methyl-7-dimethylamino- 4H-benzo-3,1-oxazin auch isomeres thereof und 2-Phenyl-4-(4-diethylaminophenyl)-4-phenyl-6-methyl-7-dimethylamino-4H-benzo-3,1-oxazin.

Lösungsmittel für Farbstoffbildner können z.B. sein:
chloriertes Diphenyl, chloriertes Paraffin, native Öle wie Baumwollsamenöl und Erdnußöl, Siliconöl, Trikresylphosphat, Monochlorbenzol, teilhydrierte Terphenyle, alkylierte Diphenyle, alkylierte Naphthaline, Arylether, Arylalkylether, höher alkylierte Benzole und Gemische diesere Verbindungen. Die Lösungsmittel können auch zusammen mit Verdünnungsmitteln eingesetzt werden. Beispiele für Verdünnungsmittel sind Kerosine, n-Paraffine, Isoparaffine und Naphthene.

Zur Herstellung erfindungsgemäßer Mikrokapseln kann man beispielsweise die mit Amino- und Alkoholgruppen reaktive Komponente im einzukapselnden hydrophoben Kernmaterial lösen und diese organische Phase in einer kontinuierlichen wäßrigen Phase emulgieren. Die wäßrige Phase kann gegebenenfalls Schutzkolloide und/oder Emulgatoren enthalten.

Zu einer derartigen Emulsion kann man dann eine Base und eine wäßrige Lösung eines Hydroxylammoniumsalzes zufügen. Man kann zu einer derartigen Emulsion zuerst eine Base und dann eine Hydroxylammoniumsalz- Lösung oder umgekehrt oder Base und Hydroxylammoniumsalz-Lösung gleichzeitig zur Emulsion geben.

Die Grenzflächenpolyaddition oder -kondensation läuft dann ab, indem das in der wäßrigen Phase befindliche Hydroxylamin mit der in der organischen, dispersen Phase befindlichen, mit Amino- und Alkoholgruppen reaktiven Komponente unter Ausbildung von Polyadditions- bzw. -kondensationsprodukten bestehenden Wänden um die Tröpfchen der organischen Phase reagiert.

Diese Grenzflächenreaktion kann beispielsweise bei Temperaturen im Bereich von -3 bis +50°C ablaufen, vorzugsweise arbeitet man hier bei 0 bis 25°C, besonders bevorzugt bei 20 bis 25°C.

Das Hydroxylamin bzw. das Hydroxylammoniumsalz kann beispielsweise in einer Menge eingesetzt werden, die 20 bis 500 Gew.-% derjenigen Menge entspricht, die für eine stöchiometrische Umsetzung mit der mit Amino- und Alkoholgruppen reaktiven Komponente benötigt wird. Vorzugsweise beträgt diese Menge 50 bis 400 Gew.-%, besonders bevorzugt 80 bis 200 Gew.-%.

Zur Emulgierung und Stabilisierung der Emulsion ist es vorteilhaft, der wäßrigen Phase Schutzkolloide und/oder Emulgierhilfsmittel zuzusetzen. Beispiele für Schutzkolloide sind Carboxymethylcellulose, Gelatine und Polyvinylalkohol; Beispiele für Emulgatoren sind oxethyliertes 3-Benzylhydroxybiphenyl, Umsetzungsprodukte von Nonylphenol mit Ethylenoxid, Sorbitanfettsäureester, Polyvinylpyrrolidone und monomere oder oligomere Sulfonate.

Erfindungsgemäße Mikrokapseln können kontinuierlich oder diskontinuierlich hergestellt werden. Man kann beliebige Dispergiergeräte verwenden, die ein Schergefälle erzeugen, beispielsweise Blattrührer, Korbrührer, Schnellrührer, Kolloidmühlen, Homogenisatoren, Ultraschalldispergatoren, Düsen, Strahldüsen und Supratonmaschinen. Die Stärke der Turbulenz beim Vermischen ist in erster Linie bestimmend für den Durchmesser der anschließend erhaltenen Mikrokapseln. Der Durchmesser der Kapseln kann z.B. im Bereich von 1 bis 2.000 μm liegen. Bevorzugt sind Kapseln mit Durchmessern von 2 bis 20 μm.

Nach der Verkapselung liegt im allgemeinen eine relativ hochkonzentrierte Suspension von Mikrokapseln in der wäßrigen Phase vor. Diese Suspension kann, gegebenenfalls nach einer kurzen Nachbehandlung, z.B. Rühren bei erhöhter Temperatur, direkt für den jeweils vorgesehenen Einsatzzweck verwendet werden.

Die Suspension läßt sich beispielsweise durch Sprühtrocknung in ein agglomeratfreies Kapselpulver überführen.

Mikroverkapselte Farbstoffvorläufer enthaltende Suspensionen können beispielsweise zur Herstellung von kohlefreien Durchschreibepapieren und von Thermopapieren verwendet werden. Hierzu kann man beispielsweise einer solchen Suspension Bindemittel und Abstandshalter zufügen und sie dann auf eine Papierträgerbahn aufstreichen. Die Formulierung derartiger Streichfarben und deren Aufbringen auf Papier ist an sich bekannt. Vorteilhafterweise können erfindungsgemäße Mikrokapseln in Form hochkonzentrierter Streichmassen verwendet und dabei die Trocknung der Beschichtungsmassen rationeller gestaltet werden. Die Beschichtung kann auch mit blade-coater oder mittels Gravurwalzen vorgenommen werden, was einen schnelleren Auftrag der Beschichtungsmasse als beispielsweise eine Beschichtung mit Luftrakeln gestattet.

Es ist auch möglich, erfindungsgemäße Mikrokapseln enthaltende Suspensionen direkt und ohne aufwendige Aufkonzentrierung zur Herstellung wäßriger Flexodruckpasten zu verwenden.

Als Farbentwickler für Farbstoffverläufer, die in erfindungsgemäßen Mikrokapseln verkapselt sind, können an sich bekannte Farbentwickler eingesetzt werden, wie saure Tone, Montmorillonit, Bentonite, Smectite und synthetische Phenol- oder Salicylatharze.

Die erfindungsgemäßen Kapseln haben den Vorteil, daß sie bei tieferen Temperaturen als bisher hergestellt werden können, wobei trotzdem dichte Kapseln erhalten werden und die reaktiven Komponenten praktisch vollständig abreagieren.

Spezielle Ausführungsformen der vorliegenden Erfindung sind in den nachfolgenden Beispielen enthalten.

## Beispiele

### Beispiel 1

132,2 g Chlorparaffin (Meflex® DA 029 von der Fa. ICI) und 198,4 g Dodecylbenzol wurden gemischt und in dieser Mischung 17,4 g eines schwarz entwickelnden Farbgebergemisches enthaltend Pergascript® Grün I-GD 14 Gew.-%, Pergascript® Orange I-5R 14 Gew.-%, Pergascript® Blau SRB 17,4 Gew.-%, Pergascript® Blau I-2R (C.V.L.) 26 Gew.-% (alle von der Fa. Ciba-Geigy) und Reaktgelb® 186 28,2 Gew.-% (von der Fa. BASF) unter Rühren und Erwärmen auf 90°C gelöst. Zu dieser Lösung wurden 52 g eines Oxadiazintrions von Hexamethylendiisocyanat (NCO-Gehalt 20,5 %) gegeben. Das so erhaltene Gemisch wurde zusammen mit 484 g einer 0,5 %igen teilverseiftes Polyvinylacetat enthaltenden wäßrigen Lösung mit einem Rotor-Stator-Emulgiergerät emulgiert, bis eine Tröpfchengröße von 8 µm erreicht war. Zu dieser Emulsion wurden unter Rühren bei Raumtemperatur 116 g einer 9 %igen wäßrigen Lösung von Hydroxylammoniumsulfat gegeben, anschließend innerhalb von 20 Minuten durch Zugabe von 170 g einer wäßrigen 1 n NaOH-Lösung ein pH-Wert von 7,5 eingestellt und 24 Stunden bei Raumtemperatur nachgerührt. Es wurde eine Dispersion erhalten die 34 % Mikrokapseln enthielt.

Diese Dispersion wurde mit einem 40 µm Drahtrakel auf ein handelsübliches Rohpapier in einer Menge von 3 g Kapseln pro $m^2$ aufgestrichen und getrocknet. Dann wurde das so beschichtete Papier mit der beschichteten Seite auf ein zweites Papier gelegt, das oberflächlich mit einem Farbentwickler beschichtet war (handelsübliches CF-Papier). Beim Durchschreiben erhielt man eine intensiv schwarze Kopie.

### Beispiel 2

Es wurde verfahren wie in Beispiel 1, jedoch wurden 484 g einer 0,7 %igen teilverseiftes Polyvinylacetat enthaltenden wäßrigen Lösung und 127,3 g der 1 n NaOH-Lösung eingesetzt. Es wurde eine 35,5 % Mikrokapseln enthaltende Dispersion erhalten.

Die Dichtigkeit der so erhaltenen Mikrokapseln wurde wie folgt geprüft:
5,63 g der Dispersion, enthaltend 2 g Mikrokapseln, 8,6 g destilliertes Wasser und 13,3 g Kieselsol 300/30 der Fa. Bayer AG wurden gemischt und 5 ml dieser Mischung mittels einer 30 µm Drahtrakel auf ein Rohpapier der Größe 21 x 29 cm aufgestrichen und anschließend getrocknet. Unmittelbar danach wurde der Remissionswert des Papiers mittels eines Geräts vom Typ Elrepho (Firma Karl Zeiss) gemessen und daraus der Absorptionswert nach folgender Gleichung errechnet:

$$\text{Prozent Absorption} = \frac{\text{Remissionswert (Rohpapier) minus Remissionswert (Probe)}}{\text{Remissionswert (Rohpapier)}} \times 100$$

Die Kapseln sind umso dichter, je geringer der so ermittelte Absorptionswert ist.

Der Absorptionswert betrug 1,8 %.

### Beispiel 3 (Vergleichsbeispiel)

Es wurde verfahren wie in Beispiel 2, jedoch wurden statt 116 g einer 9 %igen wäßrigen Lösung von Hydroxylammoniumsulfat 97,2 g einer 9 %igen wäßrigen Lösung von Diethylentriamin eingesetzt und keine Natronlauge zugefügt. Nach 24-stündigem Rühren bei Raumtemperatur wurde eine 40 %ige Mikrokapseldispersion erhalten.

Eine wie in Beispiel 2 beschrieben durchgeführte Dichtigkeitsprüfung ergab einen Absorptionswert von 20,8 %.

### Beispiel 4 (Vergleichsbeispiel)

Es wurde verfahren wie in Beispiel 3, jedoch wurde anstelle der Diethylentriamin-Lösung 84,9 g einer 9

%igen wäßrigen Lösung von Ethylendiamin verwendet.

Die wie in Beispiel 2 beschrieben durchgeführte Dichtigkeitsprüfung ergab einen Absorptionswert von 12,4 %.

Beispiel 5

Die gleiche Farbgeberlösung wie in Beispiel 1 wurde mit 52 g eines biuretisierten Hexamethylendiisocyanats (NCO-Gehalt 23,0 %) versetzt. Dieses Gemisch wurde zusammen mit 475,9 g einer 0,7 %igen teilverseiftes Polyvinylacetat enthaltenden wäßrigen Lösung wie in Beispiel 1 näher beschrieben emulgiert. Zu dieser Emulsion wurden unter Rühren bei Raumtemperatur 124,1 g einer 9 %igen wäßrigen Lösung von Hydroxylammoniumsulfat gegeben. Anschließend wurde die Dispersion innerhalb von 20 Minuten mit 136 g einer wäßrigen 1 n Natronlauge-Lösung auf einen pH-Wert von 7,5 gebracht und 30 Stunden bei Raumtemperatur nachgerührt. Es wurde eine 35,2 %ige Mikrokapseldispersion erhalten. IR-spektroskopisch konnte dann kein freies Isocyanat mehr nachgewiesen werden.

Beispiel 6 (Vergleichsbeispiel)

Es wurde verfahren wie in Beispiel 5, jedoch wurde anstelle der Hydroxylammoniumsulfat-Lösung 103,9 g einer 9 %igen wäßrigen Lösung von Diethylentriamin eingesetzt und keine Natronlauge zugefügt. Nach 30 Stunden konnte IR-spektroskopisch in der erhaltenen Mikrokapseldispersion noch freies Isocyanat nachgewiesen werden. Erst nach insgesamt 820-stündigem Rühren konnte IR-spektroskopisch kein freies Isocyanat mehr nachgewiesen werden.

Beispiel 7 (Vergleichsbeispiel)

Es wurde verfahren wie in Beispiel 6, jedoch wurde statt der Diethylentriamin-Lösung 90,8 g einer 9 %igen wäßrigen Lösung von Ethylendiamin eingesetzt.

Nach 30-stündigem Rühren bei Raumtemperatur konnte IR-spektroskopisch noch freies Isocyanat nachgewiesen werden. Erst nach insgesamt 506-stündigem Rühren konnte IR-spektroskopisch kein freies Isocyanat mehr nachgewiesen werden.

Beispiel 8

In 87 g einer wie in Beispiel 1 hergestellten Farbgeberlösung wurden 13 g Sebacoylchlorid gelöst. Diese Lösung wurde zusammen mit 855 g einer 0,7 %igen teilverseiftes Polyvinylacetat enthaltenden wäßrigen Lösung mit einem Rotor-Stator-System unter Kühlung mit einem Eisbad emulgiert. Während der Emulgierung wurden 45,1 g einer 20 %igen wäßrigen Lösung von Hydroxylammoniumsulfat zugegeben und unter Rühren bei Raumtemperatur mit 1 n NaOH-Lösung ein pH-Wert von 7,5 eingestellt und noch 24 Stunden bei Raumtemperatur nachgerührt. So wurde eine 10 %ige Mikrokapseldispersion erhalten, die wie in Beispiel 1 beschrieben auf ein handelsübliches Rohpapier aufgetragen wurde. Das Durchschreiben auf ein handelsübliches CF-Papier ergab eine intensiv schwarze Kopie.

## Patentansprüche

1. Mikrokapseln, dadurch gekennzeichnet, daß ihre Wände das Reaktionsprodukt einer Grenzflächenpolyaddition und/oder Grenzflächenpolykondensation zwischen einem Hydroxylamin und mindestens einer mit Amino- und Alkoholgruppen reaktiven Komponente enthalten.

2. Mikrokapseln nach Anspruch 1, dadurch gekennzeichnet, daß die Wände aus dem Reaktionsprodukt einer Grenzflächenpolyaddition und/oder Grenzflächenpolykondensation zwischen einem Hydroxylamin und mindestens einer mit Amino- und Alkoholgruppen reaktiven Komponente bestehen.

3. Mikrokapseln nach Ansprüchen 1 und 2, dadurch gekennzeichnet, daß das Hydroxylamin der Formel (I) entspricht

$$R - NH - OH \qquad (I),$$

in der

R für Wasserstoff, $C_1$- bis $C_{12}$-Alkyl, $C_6$- bis $C_{10}$-Aryl, $C_7$- bis $C_{12}$-Aralkyl oder $C_7$- bis $C_{12}$-Alkaryl

steht.

4. Mikrokapseln nach Ansprüchen 1 bis 3, dadurch gekennzeichnet, daß das Hydroxylamin in Form eines Salzes der Formel (II) eingesetzt wurde

$$\left[ R - \overset{\ominus}{NH_2} - OH \right]_n \quad X^{n\ominus} \qquad (II),$$

in der
R die bei Formel (I) angegebene Bedeutung hat,
X für ein Anion und
n für die Wertigkeit von X steht.
$X^{n\ominus}$ kann beispielsweise für $Cl^-$, $HCO_3^-$, $CO_3^{2-}$, $Br^-$, $J^-$, $SO_4^{2-}$, $NO_3^-$, $PO_4^{3-}$ oder $SiO_4^{4-}$ stehen.

5. Mikrokapseln nach Ansprüchen 1 bis 4, dadurch gekennzeichnet, daß es sich bei den mit Amino- und Alkoholgruppen reaktiven Komponenten um Dicarbonsäurechloride, Polycarbonsäurechloride, Disulfonsäurechloride, Polysulfonsäurechloride, Dichlorameisensäureester, Polychlorameisensäureester, Diisocyanate und/oder Polyisocyanate handelt.

6. Mikrokapseln nach Ansprüchen 1 bis 5, dadurch gekennzeichnet, daß es sich bei der mit Amino- und Alkoholgruppen reaktiven Komponente um Isocyanate der Formel (III) handelt

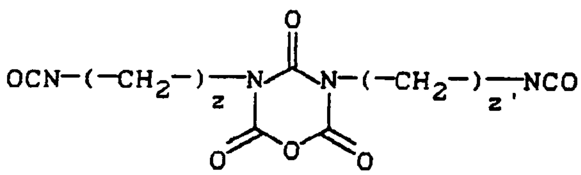
(III),

in der
z und z' unabhängig voneinander jeweils für eine ganze Zahl von 3 bis 6 stehen und/oder um Derivate des Hexamethylen-1,6-diisocyanats mit Biuretstruktur und/oder um Isocyanurat-modifizierte Polyisocyanate.

7. Verfahren zur Herstellung von Mikrokapseln, dadurch gekennzeichnet, daß man eine mit Amino- und Alkoholgruppen reaktive Komponente im einzukapselnden hydrophoben Kernmaterial löst, diese organische Phase in einer kontinuierlichen wäßrigen Phase emulgiert und zu einer derartigen Emulsion eine Base und eine wäßrige Lösung eines Hydroxylammoniumsalzes hinzufügt.

8. Verfahren nach Anspruch 7, dadurch gekennzeichnet, daß man es bei -3 bis +50°C durchführt.

9. Verfahren nach Ansprüchen 7 und 8, dadurch gekennzeichnet, daß man das Hydroxylammoniumsalz in einer Menge einsetzt, die 20 bis 500 Gew.-% derjenigen Menge entspricht, die für eine stöchiometrische Umsetzung mit der mit Amino- und Alkoholgruppen reaktiven Komponente benötigt wird.

10. Verwendung von Mikrokapseln der Ansprüche 1 bis 6 und/oder hergestellt gemäß den Ansprüchen 7 bis 9 zur Herstellung von kohlefreien Durchschreibepapieren und Thermopapieren.

## Claims

1. Microcapsules, characterised in that their walls comprise the reaction product of an interface polyaddition and/or interface polycondensation between a hydroxylamine and at least one component which is reactive with amino and alcohol groups.

2. Microcapsules according to Claim 1, characterised in that the walls consist of the reaction product of an

interface polyaddition and/or interface polycondensation between a hydroxylamine and at least one component which is reactive with amino and alcohol groups.

**3.** Microcapsules according to Claims 1 and 2, characterised in that the hydroxylamine has the formula (I)

$$R - NH - OH \qquad (I),$$

in which

R represents hydrogen, $C_1$- to $C_{12}$-alkyl, $C_6$- to $C_{10}$-aryl, $C_7$- to $C_{12}$-aralkyl or $C_7$- to $C_{12}$-alkaryl.

**4.** Microcapsules according to Claims 1 to 3, characterised in that the hydroxylamine was used in the form of a salt of the formula (II)

$$\left[ R - \overset{\oplus}{N}H_2 - OH \right]_n X^{n\ominus} \qquad (II),$$

in which

| | |
|---|---|
| R | has the meaning given in formula (I), |
| X | represents an anion and |
| n | represents the valence of X. |
| $X^{n\ominus}$ | can represent, for example, $Cl^-$, $HCO_3^-$, $CO_3^{2-}$, $Br^-$, $I^-$, $SO_4^{2-}$, $NO_3^-$, $PO_4^{3-}$ or $SiO_4^{4-}$. |

**5.** Microcapsules according to Claims 1 to 4, characterised in that the components which are reactive with amino and alcohol groups are dicarbonyl chlorides, polycarbonyl chlorides, disulphonyl chlorides, polysulphonyl chlorides, di(chloroformic ester)s, poly(chloroformic ester)s, diisocyanates and/or polyisocyanates.

**6.** Microcapsules according to Claims 1 to 5, characterised in that the components which are reactive with amino and alcohol groups are isocyanates of the formula (III)

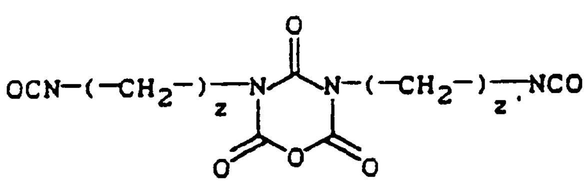

(III),

in which

z and z', independently of one another, each represent an integer from 3 to 6, and/or derivatives of hexamethylene 1,6-diisocyanate of biuret structure and/or isocyanurate-modified polyisocyanates.

**7.** Process for the preparation of microcapsules, characterised in that a component which is reactive with amino and alcohol groups is dissolved in the hydrophobic core material to be encapsulated, this organic phase is emulsified in a continuous aqueous phase, and a base and an aqueous solution of a hydroxylammonium salt are added to such an emulsion.

**8.** Process according to Claim 7, characterised in that it is carried out at -3 to +50°C.

**9.** Process according to Claims 7 and 8, characterised in that the hydroxylammonium salt is used in an amount corresponding to 20 to 500 % by weight of the amount required for stoichiometric reaction with the component which is reactive with amino and alcohol groups.

**10.** Use of the microcapsules of Claims 1 to 6 and/or microcapsules prepared according to Claims 7 to 9 for the production of carbonless copy papers and thermal papers.

**Revendications**

1. Microcapsules, caractérisées en ce que leurs parois contiennent le produit de réaction d'une polyaddition à l'interface et/ou d'une polycondensation à l'interface entre une hydroxylamine et au moins un composant apte à réagir avec des groupes amino et des groupes alcool.

2. Microcapsules suivant la revendication 1, caractérisées en ce que les parois sont constituées du produit réactionnel d'une polyaddition à l'interface et/ou d'une polycondensation à l'interface entre une hydroxylamine et un composant apte à réagir avec des groupes amino et alcool.

3. Microcapsules suivant les revendications 1 et 2, caractérisées en ce que l'hydroxylamine répond à la formule (I)

$$R - NH - OH \qquad (I)$$

dans laquelle
R représente l'hydrogène, un groupe alkyle en $C_1$ à $C_{12}$, aryle en $C_6$ à $C_{10}$, aralkyle en $C_7$ à $C_{12}$ ou alkaryle en $C_7$ à $C_{12}$.

4. Microcapsules suivant les revendications 1 à 3, caractérisées en ce que l'hydroxylamine a été utilisée sous forme d'un sel de formule (II)

$$\left[ R - \overset{\oplus}{N}H_2 - OH \right]_n X^{n\ominus} \qquad (II)$$

dans laquelle
R a la définition indiquée pour la formule (I),
X est un anion et
n a la valence de X,
$X^{n\ominus}$ pouvant représenter par exemple $Cl^-$, $HCO_3^-$, $CO_3^{2-}$, $Br^-$, $I^-$, $SO_4^{2-}$, $NO_3^-$, $PO_4^{3-}$ ou $SiO_4^{4-}$.

5. Microcapsules suivant les revendications 1 à 4, caractérisées en ce que les composants pouvant réagir avec des groupes amino et alcool sont des chlorures d'acides dicarboxyliques, des chlorures d'acides polycarboxyliques, des chlorures d'acides disulfoniques, des chlorures d'acides polysulfoniques, des esters d'acide dichloroformique, des esters d'acide polychloroformique, des diisocyanates et/ou des polyisocyanates.

6. Microcapsules suivant les revendications 1 à 5, caractérisées en ce que le composant réactif vis-à-vis de groupes amino et alcool consiste en isocyanates de formule (III)

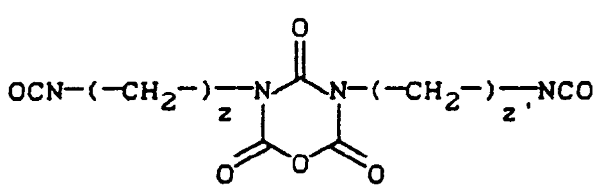

(III)

dans laquelle
z et z' représentent chacun, indépendamment l'un de l'autre, un nombre entier de 3 à 6 et/ou des dérivés de l'hexaméthylène-1,6-diisocyanate à structure de biuret et/ou des polyisocyanates modifiés par un isocyanurate.

7. Procédé de production de microcapsules, caractérisé en ce qu'on dissout un composant réactif vis-à-vis de groupes amino et de groupes alcool dans la matière hydrophobe à encapsuler constituant le noyau, on émulsionne cette phase organique dans une phase aqueuse continue et on ajoute à cette émulsion une base et une solution aqueuse d'un sel d'hydroxylammonium.

8. Procédé suivant la revendication 7, caractérisé en ce qu'il est mis en oeuvre à une température de -3 à +50°C.

**9.** Procédé suivant les revendications 7 et 8, caractérisé en ce qu'on utilise le sel d'hydroxylammonium en une quantité qui correspond à 20-500 % en poids de la quantité qui est nécessaire pour une réaction stoechiométrique avec le composant réactif vis-à-vis de groupes amino et alcool.

**10.** Utilisation de microcapsules suivant les revendications 1 à 6 et/ou préparées suivant les revendications 7 à 9 pour la production de papiers à copier sans carbone et de papiers thermographiques.